# EUROPEAN PATENT SPECIFICATION

(11) **EP 0 814 591 B1**
(45) Date of publication and mention of the grant of the patent: **06.04.2005**
(21) Application number: 97850082.5
(22) Date of filing: 27.05.1997
(51) Int. Cl.: H04M 3/50, H04M 7/00, H04Q 3/00

(54) **Telecommunication network**
Telekommunikationsnetzwerk
Réseau de télécommunication

(30) Priority: 20.06.1996 SE 9602498
(43) Date of publication of application: 29.12.1997
(73) Proprietor: TELIA AB, 123 86 Farsta (SE)
(72) Inventor: Högberg, Per, 753 24 Uppsala (SE)
(74) Representative: Hopfgarten, Nils

(56) References cited:
- EP-A- 0 501 513
- US-A- 5 519 772

## Description

### TECHNICAL FIELD

The present invention relates to a telecommunication network including at least a first telecommunication network for public communication and a second, private network to which a subscriber gets access via a telephone number, according to the preamble of claim 1.

### PRIOR ART

Larger companies which have a lot of incoming calls need a way to quickly administer them so that the person who is calling rapidly gets some form of information.
One way for this company then is to buy some type of telephone exchange to the company which can handle the problem.

In "Network and Service Evolution in Fixed and Mobile Networks", Lars Rydin and Bengt Zdebel, International Switching Symposium 1992, Yokohama, Japan, October 1992, Proceedings Vol. 1, XP 000337616 a universal personal telecommunication service is discussed which does not require a new global network, common for the growing multi-network operator environment, but could be established by a reasonable amount of investment on top of existing network hierarchy. Service integration between fixed and mobile networks are dealt with.

In "Evolution in Business Networking", by Mike Dawis, david Hudson, and Chris Thompson, Telesis, 1988, Ottawa, Canada, XP 000007730 a portfolio of business services is described, developed for a specific type of digital switches, Northern Telecom's DMS-100 Family of digital switches, to help corporate network customers to better exploit the public network. Based on "Common Channel Signalling System number 7" these services marry the functionality and control of private networks with the inherent advantages of the public network.

The paper "The Evolution of Network-Based Corporate Networks", Brad Ross, Roy Sells, Bell-Northem Research Ltd., 04.05.1992, XP 000684035 summarizes the evolution of the business services that provide corporate networking from the public network. Specific services are described and benefits of AIN-based Virtual Network Services are examined.

US-A-5 353 331 deals with personal communications service using wireline/wireless integration. An AIN wireline system connects to and controls processing of calls to a Personal Communication Service subscriber's wireless handset via a home base station or a wireless communication network to allow a user to send and receive calls from a single handset with a single assigned number whether at home or roaming. The described system would control the provision of private network service features to users of both radio link systems and land line systems to provide unbroken access to a variety of different types of communications systems linked to the system in question.

### TECHNICAL PROBLEM

The realization of a function in the network which in an intelligent way manages control of calls in cooperation with the network of a private customer is the overall problem the invention solves.

### TECHNICAL SOLUTION

The technical solution will be evident from what is indicated in the claims.

### ADVANTAGES

The solution according to the invention shows a number of advantages. In the first place one will obtain a system which is very user-friendly for the persons who are using it. Further one will achieve a higher rapidity until the person who is calling gets an answer. Further the system is very flexible, making it possible to adapt it to new sophisticated possibilities which are being developed by and by in the network. The concept also makes it possible to, in a distributed way, introduce new applications in the clients on the customer side.

### LIST OF FIGURES

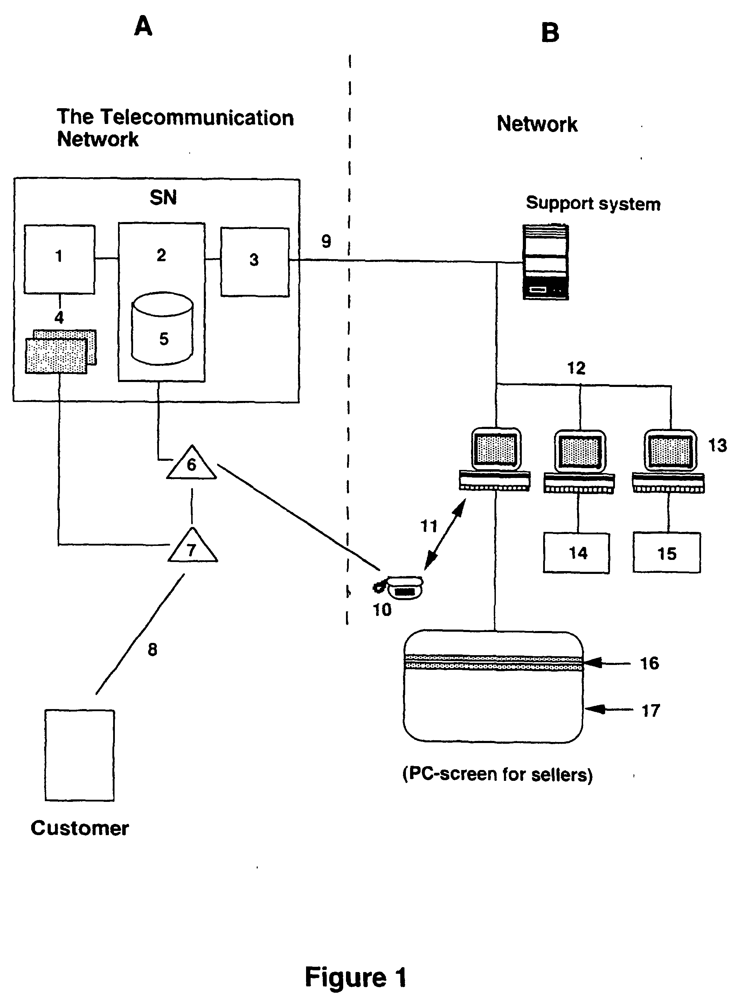

In Figure 1 the system solution according to the present invention is shown.
- 1 =: Speech response Server
- 2 =: Network Server
- 3 =: CCS
- 4 =: Infovox 3000
- 5 =: SDP
- 6 =: SCP
- 7 =: SSP
- 8 =: 020-757575
- 9 =: TCP/IP

- 10 =: Telephone, Modem
- 11 =: TAPI
- 12 =: LAN
- 13 =: CC-clients
- 14 =: Surveillance
- 15 =: Statistics/ Teleoptimizing
- 16 =: Menu/function button list
- 17 =: Petra-client

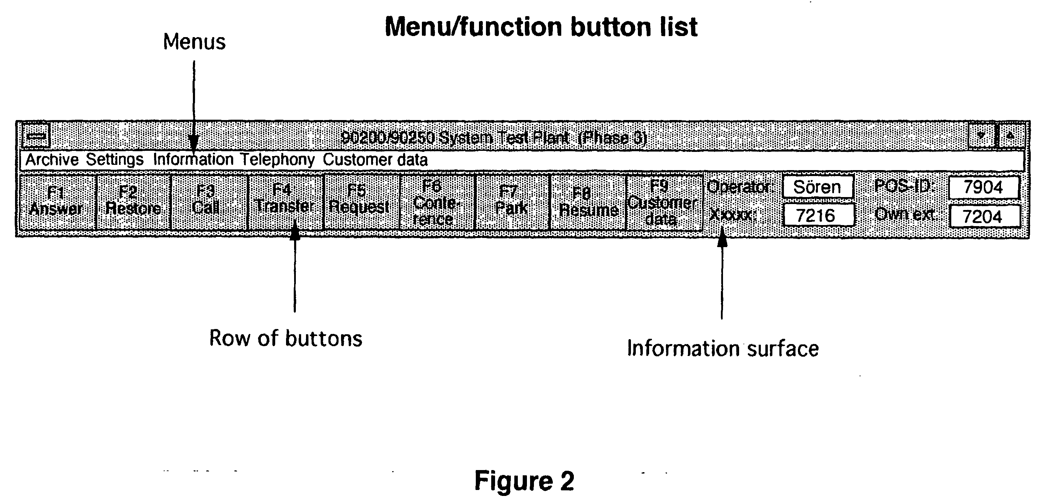

In Figure 2 an interface called "menu/function button list", from which all functions can be performed, is shown.

### DETAILED DESCRIPTION

Figure 1 shows the overall system construction according to the invention with a public network A and a private network B. In the following, the function of the different included elements are shown.
First, used definitions and abbreviations are described.

### Definitions

- A-number: The customer's telephone number.
- B-number: The number the customer has called.
- Customer: The operator subscriber's customer.
- Menu selection: The selection of the type of assignment the customer makes in the speech response system, alternatively that no selection is made.
- Support Sys: The operator customer's selling support system.
- Profile: Wanted distribution of type of assignments of incoming calls at queuing-up.
- Type of call: Classification of calls according to overloaded, night-connected, blocked etc.
- Seller: Telephhone seller at the operator subscriber.
- Selling leader: Uses the surveillance client.
- Type of assignment: Selection which the customer makes in the operator customer's main menu.

### Abbreviations

- ACD: Automatic Call Distribution
- CC: Call Center
- CCS: CallCenter Server
- DDE: Dynamic Data Exchange
- DTMF: Dual Tone Multiple Frequency, keyset code signalling
- IN: Intelligent Network
- INAP: Intelligent Network Application Protocol
- NOAC: Network Operation And Control
- PABX: Private Automatic Branch eXchange
- PSTN: Public Switched Telephone Network
- QVAST: Quality and alarm surveillance system for Transmission ((Q) KVAlitets- och larmövervakningsSystem för Transmission).
- SCP: Service Control Point; the intelligent node in the network; executes the IN-script.
- SDP: Service Data Point; the database with which the SCP communicates.
- SDN: The System Data Network; Telia's internal network for commmunication between technical support systems.
- SN: Service Node.
- SSP: Service Switching Point
- TAP1: Telephony Application Programming Interface.
- TCP/IP: Transmission Control Protocol/Internet Protocol

The platforms which are included in the solution are: SN, which consists of SDP, Speech-response server; Network server, CCS and speech response machines.
IN-node, which consists of SCP and SSP.

### CC-clients

The interfaces which are included between the platforms:
- P7/P8: The interface between speech response machines and SSP.
- INAP: The interface between SCP and SDP.
- PSTN: The interface between SSP and the sellers telephones.
- TCP/IP: The interface between CCS and the CC-clients.
- TAPI: The interface between the "menu/function button list" and the seller's telephone.
- DDE: Interface between the "menu/function button list" and Support Syst.
- QVAST: Interface towards surveillance system.

CallCenter is a service and a technical system solution which implies that large parts of a customer's CallCenter-functionality is realized in an operator's network and in cooperation with a number of client applications in the customer's network.
The service includes functionality in order to in the network manage calls from customers (for those who are connected to the service) with a welcome message and a menu selection, and after that distribute the calls to unoccupied sellers according to a specified queue algorithm. There is also functionality to queue up customers and give individual queue information when all sellers are occupied.

The queue functionlity which is realized in the service is realized by cooperation between the SCP and SN (speech response equipment and SDP). Call distribution and managing of queue is controlled by means of software in SN (CCS and speech response server).
The service also includes functions which offers sellers and selling leaders a computer integrated telephone support at their respective working places.
All sellers have possibility to be equipped with a client application which communicates with SN to transmit and receive call information. The information is forwarded also via an open interface to the customer's sell support application (which here is called Support Sys). The application also controls respective seller's telephone which makes it possible that the seller can perform telephony functions directly from his/her PC. All selling leaders are equipped with a client application to in real time be able to survey and change the present status in the CallCentre. The selling leader also gets access to statistics from SN in order to manage the planning work. The amount of traffic the system can attend, can be for instance 15000 calls per day, and 5000 calls per hour during call peaks.

### Customer scenario

To get a survey of how a customer is handled in the system, here a number of scenarios are described from the customer's perspective.

### Scenario 1 (No queue)

A customer calls an operator subscriber (020-313131).
The customer makes a selection from the menu which is presented:
Hallo and welcome to train journeys
For journeys within the country, please press 1...
The customer is connected to a seller with right profile.

### Scenario 2 (Queue)

A customer calls an operator subscriber (020-313131). The customer makes a selection from the menu which is presented:
Hallo and welcome to train journeys
For journeys within the country, please press 1...
The customer is placed in queue and speech response informs:
At present the queueing time is x minutes, but you will in a moment be connected to a seller.
The customer is connected to a seller with right profile.

### Scenario 3 (Information at night)

A customer calls an operator subscriber (020-313131)after the operator subscriber's Call Centre has closed.
Speech response informs:
Welcome, unfortunately we have closed for the day, but we have open each day between...

### Scenario 4 (overload)

A customer calls operator subscriber (020-313131) during high load.
The customer makes a selection from the menu which is presented:
Hallo and welcome to train journeys
For journeys within the country, please press 1...
Due to overload at the customer's selection, speech reponse informs:
Because a large number of customers are calling just now...
The call is disconnected.

### Scenario 5 (Other faults)

A customer calls an operator subscriber (020-313131) and all incoming lines are occupied.
The customer hears a busy tone or congestion tone.

### Scenario for the seller.

To get a brief survey over how a seller handles the system, the most common scenarios from the seller's point of view are here described:

### Scenario 1 (Logging in to the system)

The seller starts up the support application Support Sys.
The seller starts up the "menu/function button list".
The seller specifies name and password in the "menu/function button list" and then activates the function to log in.
The system collects the seller's profile from the telecommunication network and presents the information on the screen.
The seller is logged in on the telecommunication network and is ready to receive new calls.

### Scenario 2 (Incoming calls)

The sellers telephone is ringing.
The "menu/function button list" receives call data from the telecommunication network which is presented on the screen. The call data among other things includes A-number, B-number and type of assignment.
The call data is transferred to current support application.
The support application presents customer specific information to the seller. What is presented is controlled by the operator customers development of the Support Sysclient.
The seller answers the call by acivating a function in the "menu/function button list" (see Figure 2).

### Scenario 3 (Transfer call to another seller)

The seller activates the function to fetch a free seller from the telecommunication network with wanted type of assignment.
The "menu/function button list" receives the number to a free seller from the telecommunication network.
The seller activates function to call the seller.
The seller activates function to move the customer to receiving seller.
The seller is ready to handle new incoming calls.

Two Servers 1 constitute SN with speech response server, Network server and CCS. The machines are data processors. For SDP-functionality 2 Ericsson Infocom C7-cards with Ericsson INAP are used. Card and function are delivered by Sun. For communication with the SCP the nodes are connected to the telecommunication network with two 64 kbit/s-links. In the database manager all service logic and all customer data is placed.

All calls to the operator subscriber is routed to one of five Infovox 3000. Each speech response machine is equipped with line cards for 30 channels. Totally there consequently are 150 channels in normal operation.
The operator subscriber's service is configures so that the network alternatingly routes calls to the five different speech response machines. If one of the machines has a breakdown, the traffic is routed to the other. To each machine is needed a 2 Mbit/s link and connection to the network is made via P7/P8-signalling.
The speech response machines contain the operator subscribers' speech files. An speech file can be a phrase in a menu or a special message.
Examples of speech files:
Welcome to us.
For journeys within the country, please press 1.
We this week have a discount on...
Incorrect selection...
There are many already queueing, please try a little later. Software in the speech response machine receives the following information:
A-number, B-number and the customers keying (DTMF-signalling). The information then is transmitted to the speech response server for further processing of the call. The persons responsible for the operator subscriber's system can via a separate telephone number call to change certain speech response messages.

The speech response server executes on for instance one of the Sun-servers and communicates with the speech response machines via an API. The speech response server contains two modules: one which manages calls from the operator subscriber's customers, and one manages calls from the operator subscriber's system administrator to change speech response messages.

Scenario from the speech response server's perspective.

### Scenario 1 (Customer call)

The speech response server receives a message from the speech response machine when an incoming call arrives. The server instructs the speech response machine to play a message and after that wait for DTMF-signals.
The speech response server receives a message from the speech response machine with the customer's menu selection. The speech response server calls CCS via the network server to forward the customer's menu selection.
The speech response server receives a message from CCS about how the call shall be managed.
The speech response server informs the speech response machine to do something of the following:
The call shall be distributed directly to an unoccupied attendant, which implies that the speech response machine shall disconnect the call.
Instruct the speech response machine to speak a queue message and after that keep the connection until new messages are given.
Instruct the speech response machine to speak a message about that the queuing time at present is too long and after that disconnect the call.
The main task of the network server is to manage the communication between the SN and the IN-node. When SN is called from SCP, the application shall contain different modules to fetch and store call data in SDP (database).
The network server also shall keep SN together to one unit by putting through the flow of information between the speech response server and CCS.

The task of CCS (CallCenter Server) is to interconnect all client applications with SN to a CallCenter-solution.
CCS includes the following functionality:
Call distribution, ACD-module which distributes calls according to a specified algorithm from the operator customer.
Queue managing; i.e. keeping count of the current queue status for respective queue in the network (number of calls in the queue, maximal time of waiting in queue, present queuing time, average call time, number of logged in operators, and number of accessible operators).
Send call data to a seller's "menu/function button list" at the same time as a call is distributed to the seller's telephone.
Communicate with all sellers to know in which status all are.
Store information about all calls going on.
Convey information about present status for operators and queues to a supervision client.
Convey information about terminated calls to a statistics application so that selling leader can perform follow-up and make staff planning.
Scenario from CCS perspective.
To get a picture of CCS function in the system, here is described which signals that are transmitted to and from CCS at the following case of use:
Managing of an incoming call when all sellers for the type of assignment are occupied and the queue is empty:
The network server transmits a signal to CCS that a new incoming call has arrived to the telecommunication network. The network server transmits a signal to CCS about the selection of type of assignment the customer has made in the speech response system.
CCS checks if there is a free seller for the type of assignment.
CCS transmits a signal to the network server about that the queuing time is x minutes and that the customer shall be queued up.
CCS receives message from a seller for the type of assignment that he/she is free for a new call.
CCS transmits a signal to the network server about to move the customer to the seller.
CCS transmits call information to the seller's client application.
The "menu/function button list" transmits a signal to CCS with information about that the seller has answered the call.
The network server transmits a signal to CCS when the customer replaces.
The "menu/function button list" transmits a signal to CCS when the seller terminates the call and is ready to receive a new call.
CCS transmits a signal to the statistics client with call statistics.

The IN-node physically consists of an SCP and an SSP. These element also are the basis in AXE-exchanges.
Scenario from the IN-node's perspective.
Incoming calls.
A customer calls the operator subscriber (020-313131). The SSP receives the switching train asks a question towards the SCP where the service is realized.
The SCP starts executing the service script.
3.1 fetches a uniqe identifier of the call from SN (CALLID).
3.2 signals to SSP to establish the switching train towards speech response machine.
SSP establishes the switching train towards the speech response machine.
When SN finds an unoccupied seller, the speech response machine signals a B-termination to SSP.
SCP communicates with SN and obtains an answering-place number and orders the SSP to establish the switching train. When the customer or the seller terminates the call, A- or B-termination is signalled to SCP.
SCP informs SN that the call has been terminated.
The IN-scripts are installed on SCP. The scripts which are needed for the service will among other things deal with the following fields:
Connection and disconnection towards external database (SDP).
Storing of data in SDP.
Collecting data in SDP.
Connection and disconnection towards speech response machines in SN.

### CC-clients

The appliations which shall be used by sellers and supervisors in their respective working places are described in the following.
All client applications communicates with the telecommunication network via CCS, and TCP/IP functions as communication protocol. One of the advantages with using TCP/IP is that the service can be developed in order to in the future distribute new versions of the client applications directly from the telecommunication network to the local working places.
For the operator subscriber all client applications are developed as PC/OS2-applications. The architecture according to the invention makes it possible in a simple way to adapt the applications for new services.
The interface in Figure 2 shows how the application is built up. The "menu/function button list" which is implemented for the operator subscriber can be built up according to the information and functionality which is required for the service.
Via the menus of the "menu/function button list" all functions are possible to perform. The most common functions also are there in a row of buttons. The functions also are possible to perform via "abbreviated keying" to facilitate the work for the seller. The information surface has the aim of giving the seller information about, for instance, calls that are going on, queuing situation and profile.
Functions.
The application supports the following functions: Logging In/Out from the telecommunication network. Answer a call.
Terminate a call.
Change profile.
Collect queuing information.
Transfer a call to another seller.
Create conference with a selling leader.
Present information about an incoming call, A-number, B-number and type of assignment.
Transfer call information to support application.
Recording of calls.

The application includes an open DDE-interface to be integrated with different support applications. Depending on the number the customer is calling, the application can transfer call information to different support applications. This opens possibilities to develop existing, and produce new support applications without need to take any greater considerations to adaptions to the "menu/function button list".
In order to integrate the application with the telephone, a standardized CTI-interface, TAPI, is used.

The supervision client has the task to give a survey of what is happening in the CallCentre to the seller.
The application gives with a graphical interface, present status for queues and sellers. By means of the information the selling leader quickly can via functions change the configuration of the queue managing of the network.

The aim with the statistics client is to provide the operator subscriber's teleoptimizing with statistics. The application is not visual but is only a module which provides other applications with information via an interface. The aim with the module is to communicate with CCS to receive statistics about all terminated calls. The information then shall be distributed to the tele optimizing program which then processes the information to be presented to the selling leaders.

When fault occurs in SN or in the contact with surrounding system, this must be informed about by means of an alarm. The alarm is written into a central database (QVAST) then to be transferred to NOAC and further for measure. In this way the service is surveilled so that maximal accessibility is achieved.
The access to the server is made via SDN.

The invention is only restricted by the following patent claims.

## Claims

1. Telecommunication network including at least a first telecommunication network
(A) for public communication and a second, private network (B) to which a subscriber gets access via a telephone number, control and functionality to manage calls from a subscriber to the private network (B) being executed in the public network (A) by cooperation with an Intelligent Network-node, IN-node, and a Service-node, SN-node, **characterized in that** the SN-node comprises a Call Center Server (3), CCS, which is adapted to interconnect all client applications in the private network to a uniform Call Center solution, and **in that** equipment of all selling leaders comprises a client application for supervising and changing, in real time, current status in the Call Center, CC.

2. Telecommunication network according to claim 1, **characterized in that** the IN-node consists of a Service Control Point (6), SCP, and a Service Switching Point (7), SSP, and **in that** the SN-node consists of a Service Data Point (5), SDP, speech response server (1), a network server (2), a CCS (3), and a speech response machine (4).

3. Telecommunication network according to claim 1 or 2, **characterized in that** the CCS (3) comprises means for call distribution, an Automatic Call Distribution-module, ACD-module, for distributing calls according to a specified algorithm from the operator customer, a means for queue managing, means for transmitting call data to a seller's "menu/function button list" simultaneously with distribution of a call to a seller's telephone, means for communicating with all sellers for getting status information, means for storing information about all ongoing calls, means for conveying information about present status of operators and queues to a supervisory client (14), and means for conveying information about terminated calls to a statistics application (15) for selling leaders to perform follow up and staff planning.

4. Telecommunication network according to any of the previous claims, **characterized in that** an interface between CCS (3) and the CC-clients (13) in the private network (B) consists of a Transmission Control Protocol/Internet Protocol (9), TCP/IP.

## Patentansprüche

1. Telekommunikationsnetz mit mindestens einem ersten Telekommunikationsnetz (A) zur öffentlichen Kommunikation und einem zweiten, privaten Netz (B), zu dem ein Teilnehmer über eine Telefonnummer Zugang erhält, wobei Steuerung und Funktionalität zum Verwalten von Anrufen von einem Teilnehmer zu dem privaten Netz (B) in dem öffentlichen Netz (A) durch Kooperation mit einem intelligenten Netzknoten, IN-Knoten, und einem Dienstknoten, SN-Knoten, ausgeführt werden, **dadurch gekennzeichnet, dass** der SN-Knoten einen Anrufzentralen-Server (3), css, umfasst, der so ausgelegt ist, dass er alle Client-Anwendungen in dem privaten Netz mit einer gleichförmigen Anrufzentralenlösung verbindet, und dadurch, dass die Ausstattung aller Verkaufsleiter eine Client-Anwendung zum Überwachen und Ändern des aktuellen Status in der Anrufzentrale CC in Echtzeit umfasst.

2. Telekommunikationsnetz nach Anspruch 1, **dadurch gekennzeichnet, dass** der IN-Knoten aus einem Dienststeuerpunkt (6), SCP, und einem Dienstvermittlungspunkt (7), SSP, besteht und dadurch, dass der SN-Knoten aus einem Dienstdatenpunkt (5), SPP, einem Sprachantwort-Server (1), einem Netz-Server (2), einem CCS (3) und einer Sprachantwortmaschine (4) besteht.

3. Telekommunikationsnetz nach Anspruch 1 oder 2, **dadurch gekennzeichnet, dass** der CCS (3) folgendes umfasst: Mittel zur Anrufverteilung, ein Modul zur automatischen Anrufverteilung, ein ACD-Modul zum Verteilen von Anrufen gemäß einem spezifizierten Algorithmus von dem Betreiberkunden, ein Mittel zur Warteschlangenverwaltung, Mittel zum Senden von Anrufdaten zu der "Menü/-Funktionstastenliste" eines Verkäufers gleichzeitig mit der Verteilung eines Anrufs zu dem Telefon eines Verkäufers, Mittel zum Kommunizieren mit allen Verkäufern zum Erhalten von Statusinformation, Mittel zum Speichern von Informationen über alle gerade laufenden Anrufe, Mittel zum Übermitteln von Informationen über den derzeitigen Status von Betreibern und Warteschlangen zu einem Überwachungs-Client (14) und Mittel zum Übermitteln von Informationen über beendete Anrufe zu einer Statistikanwendung (15), damit Verkaufsleiter Folge- und Angestelltenplanung durchführen können.

4. Telekommunikationsnetz nach einem der vorhergehenden Ansprüche, **dadurch gekennzeichnet, dass** eine Schnittstelle zwischen CCS (3) und den CC-Clients (13) in dem privaten Netz (B) aus einem Übertragungssteuerungsprotokoll/Internet-Protokoll (9) TCP/IP besteht.

## Revendications

1. Réseau de télécommunication comprenant au moins un premier réseau de télécommunication (A) pour la communication publique et un second réseau privé (B) auquel un abonné a accès via un numéro de téléphone, le contrôle et la fonctionnalité de gérer des appels d'un abonné au réseau privé (B) étant exécutés dans le réseau public (A) par coopération avec un noeud de réseau intelligent, noeud IN, et un noeud de service, noeud SN, **caractérisé en ce que** le noeud SN comprend un serveur de centre d'appels (3), CCS, qui est adapté pour interconnecter toutes les applications client dans le réseau privé à une solution de centre d'appels uniforme, et **en ce que** l'équipement de tous les chefs de vente comprend une application client pour superviser et changer, en temps réel, l'état actuel dans le centre d'appels, CC.

2. Réseau de télécommunication selon la revendication 1, **caractérisé en ce que** le noeud IN est constitué par un point de contrôle de service (6), SCP, et un commutateur d'accès aux services (7), SSP, et **en ce que** le noeud SN est constitué par un point de données de service (5), SDP, un serveur à réponse vocale (1), un serveur de réseau (2), un CCS (3), et une machine à réponse vocale (4).

3. Réseau de télécommunication selon la revendication 1 ou 2, **caractérisé en ce que** le CCS (3) comprend des moyens pour la distribution d'appels, un module de distribution automatique d'appels, module ACD, pour distribuer les appels selon un algorithme spécifié du client de l'opérateur, un moyen pour la gestion de file d'attente, des moyens pour transmettre des données d'appel à la « liste de boutons menu/fonction » d'un vendeur simultanément avec la distribution d'un appel au téléphone d'un vendeur, des moyens pour communiquer avec tous les vendeurs pour obtenir des informations d'état, des moyens pour stocker des informations concernant tous les appels en cours, des moyens pour acheminer les informations concernant l'état actuel des opérateurs et des files d'attente à un client superviseur (14), et des moyens pour acheminer les informations concernant les appels terminés à une application de statistiques (15) pour les chefs de vente afin d'effectuer le suivi et la planification du personnel.

4. Réseau de télécommunication selon l'une quelconque des revendications précédentes, **caractérisé en ce qu'**une interface entre le CCS (3) et les clients CC (13) dans le réseau privé (B) est constituée par un protocole de contrôle de transmission/protocole Internet (9), TCP/IP.
